# EUROPEAN PATENT APPLICATION

(11) **EP 1 971 099 A1**
(43) Date of publication of application: **17.09.2008**
(21) Application number: 06817885.4
(22) Date of filing: 24.11.2006
(51) Int. Cl.: H04L 29/02

(54) **A DATA TRANSFER METHOD AND A SWITCHING EQUIPMENT**

(30) Priority: 31.12.2005 CN 200510137229
(71) Applicant: Huawei Technologies Co., Ltd., Longgang District, Shenzhen Guangdong 518129 (CN)
(72) Inventor: HE, Jianfei, Guangdong 518129 (CN)
(74) Representative: Hengelhaupt, Jürgen
(86) International application number: PCT/CN2006/003156
(87) International publication number: WO 2007/076678

(57) **Abstract**

A data transfer method and a switching equipment, the corresponding relation between the service instances and the multicast addresses is set in the network, the node receives the service instance data message need to be transmitted using the broadcast mechanism, then determines the service instance which the service instance data message belongs to, and searches the multicast address which the service instance which the service instance data message belongs to is corresponding to from the corresponding relation, and then, transmits the service instance data message by making the searched multicast address as the destination address. The network includes the Ethernet and the IP network, the multicast address includes the multicast MAC address, the multicast IP address and so on. The embodiments of present invention transform the broadcast mechanism to the multicast mechanism and control the generation of the broadcast storm effectively, the link failure only may affect the data messages transmitted through the link, the delay problem of the generation tree protocol is avoided, the requirements of the telecommunication services are satisfied, the stability and reliability of the network transmission are increased.

## Description

### Field of the Invention

The present invention relates to the field of communication technology, and in particular to a method for transmitting data and a switching apparatus.

### Background of the Invention

Multipoint-to-Multipoint (MP2MP) service is an important type of service in the telecommunication network. At present, there are mainly two methods for implementing the MP2MP service based on the Ethernet. Method I

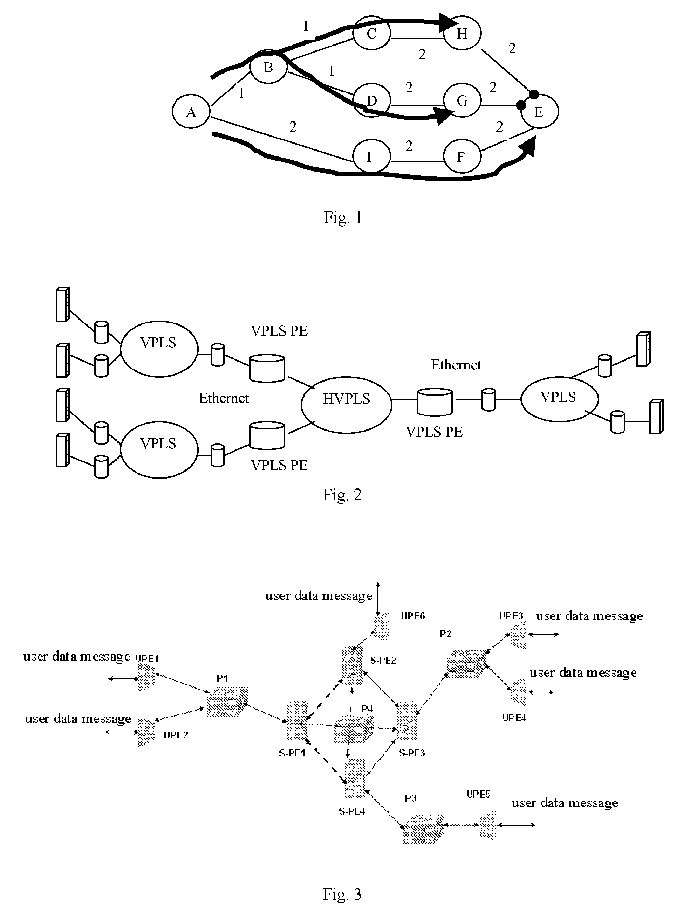

Firstly, respective nodes are interconnected by traditional Ethernet bridges, and forwarding entries in respective Ethernet bridges are obtained by self-learning mechanism. Spanning Tree Protocol (STP) is used to avoid broadcast storm. With STP, a tree-like active network topology is obtained by blocking some links in the Ethernet. Figure 1 presents a tree-like network topology with node A as root. In figure 1, two nodes of node E are blocked so as to prevent the broadcast storm. The Ethernet bridges transmit data messages based on the forwarding entries and the tree-like network topology for implementing the MP2MP service.

The method is advantageous in its simplicity and is independent on management plane. However, the inventors of the invention find through intensive research that, when the method is applied to the telecommunication network, if a link failure occurs, convergence is required through the Spanning Tree Protocol to regenerate a new tree, so as to achieve another effective stable network topology. The time required to regenerate a network topology is relatively long and may reach the second order, and thus the requirement of service continuity for the telecommunication service may not be satisfied. Moreover, during the convergence, not only the services which use the failure link, but also all services related to the tree in the entire network are affected, thereby expanding the scope affected by the failure.

Method II

Multiple protocol Label Switching (MPLS) method is adopted in the Ethernet for MP2MP service implementation.

MPLS Virtual Private LAN Service (VPLS) mechanism is based on MPLS tunnels which are used for connecting respective nodes. MPLS VPLS mechanism introduces a so-called split-horizon mechanism to avoid the broadcast storm. Split-horizon means data received from one tunnel may not be forwarded to another tunnel by a node. However, the inventors of the invention find through intensive research that, though the broadcast storm is avoided by using the split-horizon mechanism, full-mesh tunnels are required to be set up among respective service nodes, that is to say, a tunnel is set up between every two service nodes. There are n×(n-1)/2 tunnels among N service nodes, which results in the problem of network scalability.

For resolving the problem of the network scalability, MPLS VPLS introduces the hierarchical VPLS (H-VPLS) architecture. Figure 2 shows a typical H-VPLS architecture. In figure 2, the PEs in the H-VPLS architecture are classified as the PE-rs and MTU-s. Full-mesh tunnels are set up among the PE-rs and the tunnels having the Hub-Spoke model are set up between a PE-rs and its attached MTU-s.

Although the quality of service can be guaranteed by the MPLS tunnel technology, the inventors of the invention find through intensive research that, when the Ethernet service is carried in the H-VPLS architecture, it is required for the PE-rs to determine a corresponding MPLS tunnel according to the MAC address of the service, which results in a need of retaining the users' MAC addresses in PE-rs in the MPLS VPLS and thus influences the scalability of the network.

### Summary of the Invention

The embodiments of the present invention provide a method for transmitting data and a switching apparatus. The method and apparatus reduce the scope affected by a link failure and make the continuity of the service meet the requirement of the telecommunication services, while avoiding the broadcast storm and improving the controllability of the data message transmission.

The embodiments of the invention provide a method for transmitting data , in which mapping information between service instances and multicast addresses is configured in a network, the method comprising:
receiving, by a node, a service instance data message needed to be transmitted through a broadcast mechanism, determining, by the node, a service instance to which the service instance data message belongs, querying, by the node, a multicast address corresponding to the service instance to which the service instance data message belongs according to the mapping information, and, forwarding, by the node, the service instance data message using the found multicast address as a destination address.

The embodiments of the invention also provide a switching apparatus comprising a storage nodule and a forwarding module, in which:
the storage module is adapted to store mapping information between service instances and multiple addresses; and
the forwarding module is adapted to, after the switching apparatus to which the forwarding module belongs has received a service instance data message needed to be transmitted through broadcast mechanism, determine the service instance to which the service instance data message belongs, query, from the mapping information stored in the storage module, a multicast address corresponding to the service instance to which the service instance data message belongs, and transmit the service instance data message according to the found multicast address.

It can be understood through the above description of the technical solutions that, the embodiments of the invention transform the broadcast mechanism into the multicast mechanism through transmitting, in the multicast mode, the service instance data message needed to be transmitted through the broadcast mechanism by using the multicast addresses, thereby avoiding the broadcast storm and making the transmission of the data message have the controllability. Moreover, the embodiments of the invention may avoid the phenomenon introduced by the Spanning Tree Protocol that a link failure often affects a large scope, thereby making the link failure only affect the data messages transmitted through the link and avoiding the delay for regenerating a tree, and making the continuity of the services meet the requirement of the telecommunication services. Accordingly, the stability and reliability of the network transmission are increased by the technical solutions provided by the embodiments of the invention.

### Brief Description of the Drawings

Figure 1 illustrates a tree generated by making the bridge A be the root node in the prior art.

Figure 2 illustrates the H-VPLS architecture in the prior art.

Figure 3 is a schematic diagram illustrating a method for implementing the multipoint-to-multipoint service according to an embodiment of the invention.

Figure 4 is a schematic diagram illustrating the MAC-in-MAC encapsulation of a user data message according to an embodiment of the invention.

Figure 5 is a first flowchart illustrating the processing of the data message by an edge bridge of the operator network according to an embodiment of the invention.

Figure 6 is a second flowchart illustrating the processing of the data message by an edge bridge of the operator network according to an embodiment of the invention.

### Detailed Description of the Embodiments

In an embodiment of the invention, mapping information between the service instances in the network and the multicast addresses is configured in a network node, and mapping information between the service instances in the network and the unicast addresses may also be configured in the network node, which node is, for example, an operator network node. After having received a service instance data message, the node first determines whether the service instance data message needs to be forwarded through the broadcast mechanism. If the service instance data message needs not to be forwarded through the broadcast mechanism, the node may process this service instance data message according to the existing method for transmitting the data message. If the node determines the service instance data message needs to be transmitted through the broadcast mechanism, the node determines the service instance which the service instance data message belongs to, query the multicast address corresponding to the service instance to which this service instance data message belongs according to the mapping information stored in the node, and finally, transmits the service instance data message based on the found multicast address. It can be seen from the above technical solution that, if the found address is a multicast address, the embodiments of the invention transform the broadcast mechanism into the multicast mechanism; if the found address is a unicast address, the embodiments of the invention transform the broadcast mechanism into the unicast mechanism, thereby avoiding the broadcast storm.

The technical solutions of the embodiments of the invention can be applicable in both the Ethernet and the IP network. The above multicast address in the Ethernet may be a multicast MAC address, and in the IP network the multicast address may be a multicast IP address. Since the node in the embodiments of the invention may implement the MP2MP service according to the multicast MAC address, the multicast IP address and the like, the phenomenon, caused by the Spanning Tree Protocol, that the link failure often affects a large scope in the prior art may be avoided, confining the effect to the data messages transmitted through the link; as a result, the delay for regenerating a tree is avoided, and the service continuity is able to meet the requirement of the telecommunication services.

The technical solutions provided by the embodiments of the invention will be described in detail in such examples that the network is the Ethernet and the service instance is the MP2MP service.

In the embodiments of the invention, the mapping information between the multicast addresses and the MP2MP services need to be configured firstly, that is, a multicast address is assigned for each of the MP2MP services in the network. When a node receives a service instance data message of the MP2MP service, it determines whether the data message needs to be transmitted through the broadcast mechanism. The node herein may be a user edge node in the operator network, be an edge node of the operator backbone network or further be an intermediate node in the operator network.

When the node is a user edge node of the operator network and the user edge node of the operator network determines that the data message is a unicast data message with an unknown destination address or a broadcast data message, and the broadcast mechanism is used to transmit the data message. In such a case, the user edge node forwards the data message according to the multicast address corresponding to the MP2MP service to which this service instance data message belongs. A specific process for forwarding a data message will be described as follows.

When a user data message enters the operator network and the user edge node determines that the destination MAC address of the received user data message has no corresponding destination address in the operator network, such as a P-MAC address, the data message is encapsulated by using the multicast address corresponding to the MP2MP service to which the service instance data message belongs as an outermost destination address of the data message, and the encapsulated data message is forwarded according to the forwarding information corresponding to this multicast address stored in the user edge node.

The above described situation that the destination MAC address of the user data message has no corresponding P-MAC address may be that the unicast destination MAC address of the user data message has no corresponding P-MAC address, or that the multicast destination MAC address of the user data message has no corresponding P-MAC address, or further, that broadcast destination MAC address of the user data message has no corresponding P-MAC address.

The above described encapsulation process can be implemented by adding a new outermost capsulation to the data message, and also can be implemented by directly replacing the outermost destination address of the data message with the multicast address corresponding to the MP2MP service.

When the node is an edge node of the operator backbone network or an intermediate node of the operator network, and determines that the destination address of the data message has no corresponding unicast forwarding information or common multicast forwarding information, the data message is determined to be transmitted through the broadcast mechanism. In such a case, the data message is forwarded according to the multicast address corresponding to the MP2MP service to which this service instance data message belongs, for example, the data message is forwarded according to the forwarding information, which is stored in the node, with the multicast address being the destination address. The common multicast forwarding information is not the multicast forwarding entries installed by the control plane/management plane as described in the technical solutions of the embodiments of the invention.

The respective nodes described above may be a switching apparatus, such as a network bridge or a routing apparatus.

The encapsulation described above may be the MAC-in-MAC encapsulation when the user edge node of the operator network receives an Ethernet message transmitted from the user side. When the user edge node of the operator network receives other types of messages transmitted from the user side, such as the ATM message, the FR message, the TDM message or the PPP message, the encapsulation described above may be the X-in-MAC encapsulation, for example, the ATM message is encapsulated with the outermost destination address being a MAC address.

The forwarding information with the multicast address corresponding to the MP2MP service being a destination address is configured in each of the nodes which the MP2MP service passes through, and the forwarding information may be configured in the forwarding entries in the respective nodes. The forwarding information of the respective nodes may be installed by the management plane or the control plane. Thereby, when the respective nodes through which the MP2MP service passes receives the data message of the MP2MP service and if the multicast destination address of the data message has no corresponding forwarding entry in the forwarding entries, the data message is discarded; and if the multicast destination address of the data message has a corresponding forwarding entry in the forwarding entries, the data message is forwarded according to the forwarding entry corresponding to the multicast destination address.

After forwarding the data message, the respective nodes may also learn the forwarding entries according to the port from which the data message is received and the source address information of the encapsulated data message, and add the mapping information between the port from which the data message is received and the source address information into the forwarding table, so as to form a new unicast forwarding entry or a new common multicast forwarding entry.

The embodiments of the invention may set tunnels among the edge nodes of the operator backbone network. The forwarding entries of the MP2MP service configured in the edge nodes of the backbone network satisfy such a condition that when the edge node of the backbone network receives, from a tunnel, a data message with a multicast address being the destination address, this data message may only be forwarded to the client network side but may not be transmitted again through other tunnels among the edge nodes of the backbone network. In other words, the split-horizon mechanism is adopted for the tunnels among the edge nodes of the backbone network.

The MAC address information of the user terminal needs not to be stored by the edge node of the backbone network when the data message received by the edge node of the backbone network is a data message with the MAC-in-MAC encapsulation, thus it is convenient for expanding the network and increasing the scalability of the network.

The edge node of the operator network may also assign characteristic information for each of the service instances when the MP2MP service needs to be provided with the quality of service. The characteristic information is provided mainly for identifying the quality of service (QoS) of each service instance, that is, the processing, such as the differentiated QoS, may be performed for the service instance in the network by using the characteristic information. The QoS information corresponding to the service instance may be carried in the service instance data message when the encapsulation is performed by the user edge node of the operator network, so that the intermediate nodes through which the data message passes can provide corresponding QoS guarantee for the data message according to the QoS information carried in the data message.

When the technical solutions of the embodiments of the invention are adapted to the IP network, the method for transmitting the data is basically the same as that for the Ethernet described above. The detailed description thereof is omitted.

The method, system and switching apparatus for implementing the MP2MP service according to the embodiments of the invention will be described in detail in combination with the accompanying drawings by taking the Ethernet as an example.

A system for implementing the MP2MP service, i.e. the operator network, according to the embodiments of the invention is shown in figure 3.

In figure 3, UPE1, UPE2, UPE3, UPE4, UPE5 and UPE6 are user edge bridges, i.e. the MTU-s, in the Ethernet operator network. S-PE1, S-PE2, S-PE3 and S-PE4 are edge nodes of the backbone network in the Ethernet operator network, i.e., the PE-rs. P1, P2, P3 and P4 are the intermediate nodes Ps in the Ethernet operator network, which connect the MTU-s and the PE-rs or connect different PE-rs.

First, a multicast address, i.e., a service instance address, needs to be assigned for each of the MP2MP service instances. When the QoS processing is required to be implemented for the service instance, a characteristic information field, i.e., a service instance ID, needs to be further assigned for each of the MP2MP service instances. The characteristic information field may be a VLAN tag or an I-tag. For the Pseudo Wires (PW) technology based on the Ethernet, the characteristic information field also may be a PW tag.

In the embodiments of the invention, the tunnels set up among the edge nodes of the operator backbone network are shown in figure 3, for example, the tunnels set up between the S-PE1 and S-PE2, S-PE1 and S-PE3, S-PE1 and S-PE4, S-PE2 and S-PE3, S-PE2 and S-PE4, S-PE3 and S-PE4. The forwarding information of these point-to-point tunnels and common multicast forwarding information may be obtained by the self-learning mechanism, while in the embodiments of the invention, the forwarding information with the multicast address for the MP2MP service being the destination address needs to be installed by the control plane or management plane.

The control plane or management plane is required to dispatch the forwarding information with the multicast address being the destination address, to each of the nodes through which the MP2MP service passes. The forwarding information herein includes the forwarding path information, configured in the P node which is on the path between two S-PEs, for the multicast address corresponding to the service instance, and the forwarding path information, configured in the P node on the path between the S-PE and UPE, for the multicast address corresponding to the service instance.

Supposing the MAC addresses for UPE1, UPE2, UPE3, UPE4, UPE5 and UPE6 are MAC UPE1, MAC UPE2, MAC UPE3, MAC UPE4, MAC UPE5 and MAC UPE6 respectively, and UPE1, UPE3 and UPE5 form a service instance of the MP2MP service and the multicast address configured for this service instance of the MP2MP service is MulMAC1-3-5. In such a case, the forwarding table in the P4 node is illustrated as in the following table 1.

**Table 1**

| Destination Address | B-TAG | Output Port |
|---|---|---|
| MAC UPE1 | 324 | 1 |
| MAC UPE1 | 57 | 1 |
| MAC UPE3 | 324 | 2 |
| MAC UPE4 | 324 | 2 |
| MAC UPE5 | 324 | 3 |
| MAC UPE6 | 324 | 3 |
| MulMAC1-3-5 | 324 | 1, 2, 3 |

In table 1, the table items corresponding to the destination addresses MAC UPE1, MAC UPE2, MAC UPE3, MAC UPE4, MAC UPE5 and MAC UPE6 are forwarding entries for the unicast message. The table items describe the forwarding rules for the unicast message. The six forwarding items may be obtained through a self-learning process. The table item corresponding to the destination address MulMAC1-3-5 is a forwarding entry for the multicast message, and this table item describes that when the node receives a multicast message having the destination address of MulMAC1-3-5, the multicast message is forwarded simultaneously via ports selected from ports 1, 2 and 3 of P4 which are not input ports, and the input port is a port through which the multicast message enters node P4. The forwarding entry corresponding to MulMAC1-3-5 is obtained through configuration by the control plane or management plane.

The structures of the forwarding tables in S-PE1 to S-PE4 are similar to the structure of the above described forwarding table in P4.

In the embodiments of the invention, tunnels are set up between the edge nodes of the backbone network and the user edge nodes of the operator network, such as the tunnels set up between S-PE1 and UPE1, S-PE1 and UPE2, S-PE3 and UPE3, S-PE3 and UPE4, S-PE4 and UPE5, S-PE4 and UPE6, respectively. The forwarding information of the point-to-point tunnels and the general multicast forwarding information may be obtained from the self-learning process, while the forwarding information corresponding to the multicast address of the MP2MP service needs to be installed by the control plane or management plane.

Supposing the forwarding table configured in node P3 that connects UPE 5 and S-PE4 is shown as the following table 2.

**Table 2**

| Destination Address | Output Port |
|---|---|
| MAC UPE1 | 1 |
| MAC UPE2 | 1 |
| MAC UPE3 | 1 |
| MAC UPE4 | 1 |
| MAC UPE5 | 2 |
| MAC UPE6 | 2 |
| MulMAC1-3-5 | 1, 2 |

In table 2, the table items corresponding to the destination addresses MAC UPE1, MAC UPE2, MAC UPE3, MAC UPE4, MAC UPE5 and MAC UPE6 are forwarding entries for the unicast message. The forwarding entries describe the forwarding rules for the unicast message. The six forwarding items may be obtained through the self-learning process. The table item corresponding to the destination address of MulMAC1-3-5 is a forwarding entry for the multicast message, and this table item describes that when node P3 receives a multicast message having the destination address of MulMAC1-3-5, the multicast message is forwarded simultaneously via ports selected from ports the ports 1, 2 of P3 which are not input ports, and the input port is a port through which the messages enters node P3. The forwarding entry corresponding to MulMAC1-3-5 is obtained through configuration by the control plane or management plane.

The structure of the forwarding tables in P1, P2 and S-PE1 to S-PE4 are similar to the structure of the above described forwarding table in P3.

After having received the data message transmitted from the user side, the U-PE associates the data message with corresponding MP2MP service according to predetermined rules, in other words, the data message is arranged to be a service instance of the corresponding MP2MP service. The above predetermined rules for association may be the mapping between user ports and service instances of the MP2MP service, and further may be mapping between logical user ports and service instances of the MP2MP service, for example, the VLAN information in the user data message.

After having identified the service instance of the received data message, the U-PE queries the MAC address of the destination U-PE node at which the user data message needs to arrive, i.e. the P-MAC, according to the destination characteristic information field in the user data message. The destination characteristic information field in the user data message herein means a field carrying user's destination information. For the Ethernet user data message, the destination characteristic information field may be an Ethernet MAC address, such as the C-MAC, and also may be an Ethernet MAC address plus a VLAN tag. For user data message of the IP network, the destination characteristic information field may be an IP address and the like.

A mapping table, referred to as an association database (ADB), is stored in the U-PE. The mapping table associates the destination characteristic information field of the user data message with the MAC address, i.e. the P-MAC, of the U-PE node. Mapping information, between the MAC address of the U-PE node, i.e. the P-MAC, and the output ports is also stored in the U-PE. The mapping information is the forwarding information stored in the forwarding table.

When the user data message is the Ethernet data message and its destination characteristic information is the MAC address, the U-PE firstly queries the MAC address of the destination U-PE node, i.e. the P-MAC, according to the destination characteristic information and the Association Database (ADB).The Ethernet encapsulation is performed after the P-MAC is found. Then, the encapsulated data message is forwarded to a corresponding port according to the mapping information between the output ports and the MAC address of the destination U-PE node, i.e. the P-MAC.

In the encapsulation process, it is required to use the found MAC address of the U-PE node, i.e. the P-MAC, as the destination MAC address, and use the MAC address of the present U-PE node as the source MAC address. In the embodiments of the invention, a characteristic information field, such as the VLAN tag, may further be used as the service type identification of the data message. If the QoS needs to be provided for the data message, according to the embodiments of the invention, a service instance ID may also be added into the data message as the identification of the service instance when performing the QoS processing.

If the U-PE can not find the MAC address of the U-PE node, i.e. the P-MAC, the following processing will be performed.

In the process of the Ethernet encapsulation, the U-PE uses the multicast address corresponding to the service instance as the destination MAC address and uses this U-PE's MAC address as the source MAC address. In the embodiments of the invention, a characteristic information field, such as the VLAN tag, may further be used as the service type indication of the data message. If the QoS needs to be provided for the data message, according to the embodiments of the invention, a service instance ID may also be added into the data message for identification of the QoS processing corresponding to the service instance when performing the QoS processing. The U-PE forwards the encapsulated data message to the P node via a corresponding port according to the predetermined mapping table item of the output ports and the multicast addresses corresponding to the service instance.

After having received the data message transmitted from the U-PE, the P node queries in the forwarding entry for the destination MAC addresses of the data message according to the mapping information of the P-MACs, the multicast addresses of the service instance and the output ports stored in the P node. If no matched table item is found, the data message is discarded, and if a matched table item is found, the data message is forwarded to the corresponding port according to the found table item and then is transmitted to the S-PE. At the same time, the P node bonds the source MAC address of the data message with the input port from which the data message is received, and adds the mapping between the source MAC address and the port into the forwarding entries in the U-PE node, in other words, into the mapping table containing the mapping information of the MAC addresses, i.e. the P-MACs, the multicast addresses of the service instance and the output ports. This process is similar to the self-learning process in the Ethernet switch.

When the S-PE node receives the data message from the UPE side, the S-PE node queries the destination MAC address of the data message according to the mapping table of the MAC addresses, i.e. the P-MACs, the multicast addresses of the data message and the output ports stored in the S-PE node. If a multicast address of the service instance is found, the data message is forwarded to tunnels corresponding to the related S-PE and UPE according to the multicast address. This process is similar to the flooding process of the Ethernet switch. If what is found is a unicast address, corresponding ports according to the unicast address are queried. The ports include ports of the tunnels on the UPE side and ports of the tunnels on the SPE side. If no corresponding address is found, the data message is discarded. At the same time, the S-PE node bonds the source MAC address with the port from which the data message is received, adds this mapping between the source MAC address and the port into the mapping table of the U-PE node containing the mapping information of the MAC addresses, i.e. the P-MACs, the multicast addresses of the service instance and the output ports. This process is similar to the self-learning process of the Ethernet switch.

When the S-PE node receives the data message from the S-PE side, if this data message is a multicast address of the service instance, the data message is forwarded to tunnels corresponding to the related UPEs according to the port information in the forwarding entry corresponding to the multicast address. This process is similar to the flooding process of the Ethernet switch. The data message received by the S-PE node from the S-PE side will not be forwarded to the tunnels corresponding to the SPEs, which is basically the same as the split-horizon mechanism of the MPLS VPLS. If the data message is a unicast address, ports corresponding to the unicast address are queried. The ports include ports of the tunnels on the UPE side and ports of the tunnels on the SPE side. If no corresponding address is found, the data message is discarded. At the same time, the S-PE node bonds the source MAC address of the data message with the port from which the data message is received, and adds this relation between the source MAC address and the port into the mapping table of the U-PE node containing the mapping information of the MAC addresses, i.e. the P-MACs, the multicast addresses of the service instance and the output ports. This process is similar to the self-learning process of the Ethernet switch.

Each of the nodes may identify the data stream by using the service instance ID in the data message when the QoS processing needs to be implemented during the process of forwarding the data message.

As for the case that the paths are overlapped, the merge mechanism may be used to improve the bandwidth utilization. After the merge, each of the SPE nodes creates a forwarding tree of its own by using paths containing full connected tunnels among respective SPEs, and spreads forwarding tree information to the P nodes and other SPEs. The forwarding tree information is recorded by the P nodes and other SPEs and is used for sending the data message transmitted from the SPE which spreads this tree information.

The technical solutions of the embodiments of the invention will be described as follows through a particular example in conjunction with accompanying figures 3, 4, 5 and 6.

Supposing UPE1, UPE3 and UPE5 form a MP2MP service instance, and the multicast address MulMAC1-3-5 is assigned to identify the MP2MP service as shown in figure 3. Supposing the MAC addresses for the UPE1, UPE2, UPE3, UPE4, UPE5 and UPE6 are MAC UPE1, MAC UPE2, MAC UPE3, MAC UPE4, MAC UPE5 and MAC UPE6, respectively.

Supposing that a node attached to UPE1 needs to send a data message to a node attached to UPE3, the node attached to UPE1 and the node attached to UPE3 are both located in the client network, and the data message needed to be transmitted is the data message in the Ethernet message format. The format of the data message is shown in the following table 3.

**Table 3 User Data Message**

| | | | | | |
|---|---|---|---|---|---|
| C-DA | C-SA | Length/Type | Q-tag(optional) | ... | FCS |

In table 3, C-DA is the MAC address of the destination node, that is, the node identified by C-DA is a node attached to UPE3. C-SA is the MAC address of the source node, that is, the node identified by C-SA is a node attached to UPE 1.

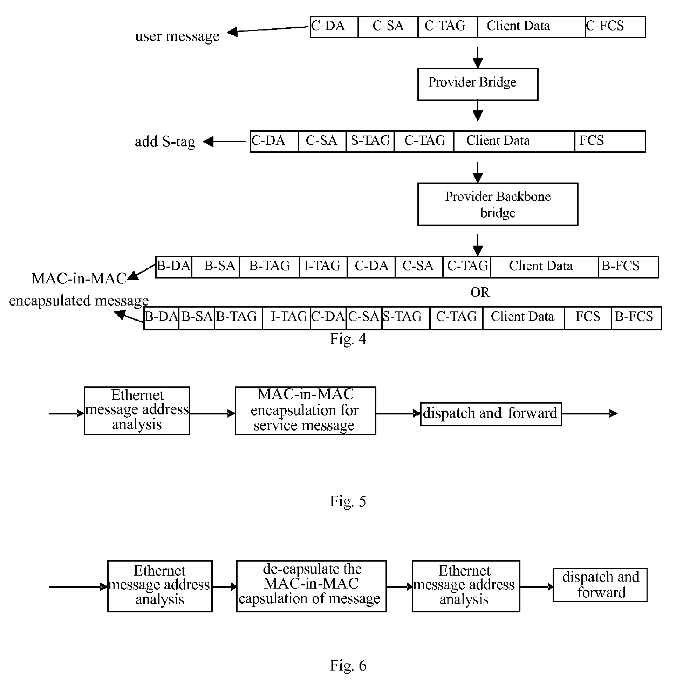

After having received the data message in the Ethernet message format from the client network, UPE 1 performs the following processing as shown in figure 5 for this data message.

First of all, destination address analysis is made for the data message in the Ethernet message format, and then the MAC-in-MAC encapsulation is performed for the data message in the Ethernet message format. In the destination address analysis, the UPE1 queries, in the stored Association Database (ADB), the MAC address B-DA of the MTU-S accessed through the destination MAC address C-DA in the data message. If the MAC address information of the accessed MTU-S corresponding to the C-DA in the Ethernet data message is found in the ADB, the found MAC address is directly used as the B-DA of the outermost MAC encapsulation; if no MAC address information of the accessed MTU-S corresponding to the C-DA in the data message is found in the ADB, the assigned multicast address MulMAC1-3-5 for identifying the MP2MP service to which the data message belongs is used as the B-DA of the outermost MAC encapsulation. Description in 802.1ah may be referred to for the details of the specific encapsulation process.

The data message for which the MAC-in-MAC encapsulation is performed by UPE1 is illustrated in figure 4 and the following table 4.

**Table 4 Message in the format of MAC-in-MAC encapsulation**

| | | | | | | | | | |
|---|---|---|---|---|---|---|---|---|---|
| **B-DA** | **B-SA** | **B-TAG** | **I-TAG** | **C-DA** | **C-SA** | **Length/Type** | **Q-tag(optional)** | **...** | **FCS** |

In table 4, the node identified by C-DA is the node attached to UPE3, and the node identified by C-SA is the node attached to UPE1. B-DA indicates the MAC address or multicast address MulMAC1-3-5 of UPE3, B-SA indicates the MAC address of UPE1, B-TAG indicates the identification information of VLAN to which the UPE1 belongs, and I-TAG is used to differentiate user services so as to implement the differentiated quality of service.

After the encapsulation, UPE1 sends the data message subjected to the MAC-in-MAC encapsulation to P1 through a virtual private link.

Supposing that the data message enters from port 1 of P1, after P1 has received the data message transmitted from the UPE1, if it is determined that the B-SA of the data message is not stored in the forwarding table stored in P1, the B-SA is added into the forwarding table, and the input port, i.e. port 1, is considered as the output port in the corresponding table items relating to the B-SA.

P1 queries the forwarding table according to B-DA of the data message, and if there is no table item corresponding to the B-DA in the forwarding table, the data message is discarded. If the B-DA is the unicast address MAC UPE3 and the output port of the corresponding items in the forwarding table is port 2, P1forwards the data message to S-PE1 via port 2. If the B-DA of the data message is the multicast address MulMAC1-3-5 and the output ports in the corresponding items of the forwarding table are port 1 and port 2, since the input port of the data message is port 1, the data message is forwarded to the S-PE1 directly from port 2 in stead of from port 1.

After having received the data message subjected to the MAC-in-MAC mode encapsulation transmitted by UPE1 from port 1, S-PE1 performs the following processing.

If the B-SA of the data message is not stored in the forwarding table stored in the S-PE1, the B-SA is added into the forwarding table and the input port, i.e. port 1, is considered as the output port of the corresponding table items relating to the B-SA.

The table items corresponding to the B-DA and B-TAG are queried in the forwarding table of S-PE1, and if there are no table items corresponding to the B-DA and B-TAG in the forwarding table, the data message is discarded. If there are table items corresponding to the B-DA and B-TAG in the forwarding table, the B-DA is the unicast address MAC UPE3 and the corresponding output port is port 2, P1 forwards the data message via port 2. If there is any table item corresponding to the B-DA and B-TAG in the forwarding table, the B-DA is the multicast address MulMAC1-3-5, and the output ports in the corresponding table item of the forwarding table are ports 1, 2, 3, 4, since the input port of the data message is port 1, the data message is forwarded directly from ports 2, 3, 4 in stead of port 1.

After having received the data message from port 2, the intermediate node P4 performs the following processing.

If no table item corresponding to the B-SA and B-TAG carried in the data message is stored in the forwarding table of P4, the table items having the destination addresses B-SA and B-TAG are added into the forwarding table, and input port 2 is considered as the output port in the table items.

Table item corresponding to the B-DA and B-TAG are queried in the forwarding table of P4, and if there is no table item corresponding to the B-DA and B-TAG in the forwarding table, the message is discarded. If there is any table item corresponding to the B-DA and B-TAG in the forwarding table, the B-DA is the unicast address MAC UPE3, and the output port in the corresponding table items is port 3, the data message is forwarded via port 3. If there are table items corresponding to the B-DA and B-TAG in the forwarding table, the B-DA is the multicast address MulMAC1-3-5, and the output ports in the corresponding table item of the forwarding table are ports 2, 4, since the input port of the data message is port 2, the data message is forwarded directly from port 4 in stead of from port 2.

After having received the data message transmitted by P4 via port 1, S-PE3 processes the data message as follows.

If no table item corresponding to the B-SA and B-TAG carried in the data message is stored in the forwarding table of S-PE3, table items having the destination addresses B-SA and B-TAG are added into the forwarding table, and input port 1 is considered as the output port in the table items.

S-PE3 queries the table items corresponding to the B-DA and B-TAG in its forwarding table, and if there is no table item corresponding to the B-DA and B-TAG in the forwarding table, the message is discarded. If there is any table item corresponding to the B-DA and B-TAG in the forwarding table, the B-DA is the unicast address MAC UPE3, and the output port in the corresponding table item is port 3, S-PE3 forwards the data message via port 3. If there is any table item corresponding to the B-DA and B-TAG in the forwarding table, the B-DA is the multicast address MulMAC1-3-5, and the output ports in the corresponding table item of the forwarding table are ports 2, 4, since the input port of the data message is port 2, the data message is forwarded to P2 directly from port 4 in stead of from port 2.

The processing to be performed in node P2 is similar to that in node P1. Detailed description thereof is omitted.

Supposing UPE3 receives the data message forwarded by P2 via port 2, UPE3 processes the data message in accordance with the procedure in figure 6.

First of all, P2 node makes source address analysis and destination address analysis for the data message in the Ethernet message format. The data message in the Ethernet message format is then de-capsulated the MAC-in-MAC encapsulation so as to be restored to the data message as initially transmitted by the user. The message with the MAC-in-MAC encapsulation de-capsulated is subject to address analysis, and finally forwarded to the client network according to the destination user address.

In the process of the source address analysis before the encapsulation, if the B-SA carried in the data message is not included in the forwarding table of the present node, the table item having the destination address of B-SA is added into the forwarding table, and input port 2 is considered as the output port corresponding to the table item.

In the process of the address analysis after the de-capsulation of the MAC-in-MAC encapsulation of the data message, the source address C-SA of the restored data message is analyzed. If the mapping between the C-SA and the B-SA is not stored in the ADB of the node, their mapping is added to the ADB of this node.

The switching apparatus provided by the embodiments of the invention mainly includes a storage nodule and a forwarding module. When the switching apparatus in the embodiments of the invention is an Ethernet switching apparatus, the switching apparatus is further equipped with a self-learning module.

The storage nodule is mainly arranged to store the mapping information between the service instances, such as the MP2MP services, and the multicast addresses. The mapping information herein is, for example, the mapping between the multicast addresses and the MP2MP services, in other words, the storage module stores the multicast addresses assigned by the network for each of the MP2MP services.

The forwarding module is mainly arranged to determine the service instance to which the service instance data message belongs when the service instance data message received by the switching apparatus to which the forwarding module belongs needs to be transmitted through the broadcast mechanism; determine the multicast address corresponding to the service instance to which the service instance data message belongs according to the mapping information stored in the storage module, and transmit the service instance data message based on the multicast address.

When the switching device is located at the user edge of the operator network, the forwarding module determines that the data message needs to be transmitted through the broadcast mechanism when it is determined that the data message is a unicast data message with an unknown destination address or a broadcast data message. When the switching apparatus is an edge node of the operator backbone network or an intermediate node of the operator network, the forwarding module determines that the data message needs to be transmitted through the broadcast mechanism when it is determined that there is no unicast forwarding information or general multicast forwarding information corresponding to the destination address of the data message.

The forwarding module stores the forwarding information which includes the forwarding information with the unicast address being the destination address and the forwarding information with the multicast address being the destination address, as described in the above method. When the switching apparatus is the edge node of the operator backbone network or the intermediate node of the operator network, the forwarding module may transmit the data message in the multicast mode according to the stored forwarding information stored therein, as described in the above method.

When the switching apparatus is the user edge node of the operator network, the forwarding module includes an encapsulation sub-module, a de-capsulation sub-module and a forwarding sub-module.

The encapsulation sub-module is mainly arranged to, when the user data enters the operator network and it is determined that there is no destination address of the operator network, such as the P-MAC address, corresponding to the destination address of the user data message, encapsulate the user data message by using the multicast address corresponding to the service instance, such as the MP2MP service, to which the user data message belongs as the outermost destination address of the user data message, and transmit the encapsulated data message to the forwarding sub-module. The above described case that there is no P-MAC address corresponding to the destination MAC address of the user data message may be the situation that there is no P-MAC address corresponding to the unicast destination MAC address of the user data message, the situation that there is no P-MAC address corresponding to the multicast destination MAC address of the user data message, and the situation that there is no P-MAC address corresponding to the broadcast destination MAC address of the user data message. The encapsulation herein may be the MAC-in-MAC encapsulation, X-in-MAC encapsulation and on the like. The specific processes of querying the P-MAC address and of the encapsulation are as described in the above method.

The de-capsulation sub-module is mainly arranged to, when the user data message leaves the operator network, de-capsulate the user data message to restore it to the data message initially transmitted by the user, and send the de-capsulated data message to the forwarding sub-module. The specific process of the de-capsulation is as described in the above method.

The transmission sub-module is mainly arranged to , after having received the data message transmitted from the encapsulation sub-module, obtain the outermost destination address of the data message, queries the forwarding information in the stored forwarding information according to this outermost destination address, forward the data message sent by the transmission sub-module according to the found forwarding information; and arranged to forward the data message sent by the de-capsulation sub-module to the user side according to the stored forwarding information. The specific forwarding process of the data message performed by the forwarding sub-module is as described in the above method.

The self-learning module is mainly arranged to learn the forwarding information according to the service instance data message received by the switching apparatus, for example, learn the forwarding information according to the port from which the data message is received and the source address information of the encapsulated data message. The mapping information of the port from which the data message is received and the source address information is transmitted to the forwarding nodule which stores the learned forwarding information, for example, the learned forwarding information is stored by the forwarding sub-module. The learned forwarding information is the unicast forwarding items and general multicast forwarding items. The specific learning process is as described in the above method.

Although the embodiments of the invention have been described above, those skilled in the art will appreciate that many additions, modifications and substitutions are possible without departing from the spirit and scope of the invention. The claims of the invention are intended to include those additions, modifications and substitutions.

## Claims

1. A method for data transmission, **characterized in that** mapping information between a service instance and a multicast address is configured in a network, said method comprising:
receiving, by a node, a service instance data message needed to be transmitted through broadcast mechanism, determining, by the node, a service instance to which the service instance data message belongs, querying, by the node, a multicast address corresponding to the service instance to which the service instance data message belongs according to the mapping information, and, forwarding, by the node, the service instance data message using the found multicast address as a destination address.

2. The method according to claim 1, **characterized in that**
the network is the Ethernet and the multicast address comprises a multicast MAC address; or
the network is the IP network and the multicast address comprises a multicast IP address.

3. The method according to claim 1, **characterized in that** the service instance data message needed to be transmitted through the broadcast mechanism is a broadcast message or a unicast message with an unknown destination address.

4. The method according to claim 1, **characterized in that** the method comprises:
causing the service instance data message to enter the network;
determining, by a user edge node in the network, that there is no network destination address corresponding to the destination address of the service instance data message or the service instance data message is a broadcast message, and then, encapsulating, by the user edge node, the service instance data message by using the multicast address corresponding to the service instance to which the service instance data message belongs as an outermost destination address of the service instance data message, after determining, by a user edge node in the network;
querying, by the user edge node, forwarding information corresponding to the outermost destination address, and forwarding, by the user edge node, the encapsulated data message according to the found forwarding information; and
de-capsulating, by the user edge node of the network, the capsulated service instance data message when the service instance data message leaves the network, querying, by the user edge node, the forwarding information corresponding to the destination address of the de-capsulated data message, and forwarding, by the user edge node, the de-capsulated data message to user side according to the found forwarding information.

5. The method according to claim 4, **characterized in that** the user data message is an Ethernet message and the encapsulation comprises MAC-in-MAC encapsulation.

6. The method according to claim 1, **characterized in that** the method further comprises:
assigning, by a user edge node in the network, characteristic information of Quality of Service (QoS) for the service instance data message according to requirements of QoS of the service instance after the service instance data message has entered the network, and carrying, by the user edge node, the characteristic information of QoS in the service instance data message.

7. The method according to claim 1, **characterized in that** the method comprises:
receiving, by the node, a data message having a destination address which is the multicast address corresponding to the service instance, querying, by the node, forwarding information corresponding to the destination address of the data message, determining, by the node, forwarding path of the data message according to the found forwarding information, and forwarding, by the node, the data message.

8. The method according to claim 4 or 7, **characterized in that** the forwarding information stored in respective nodes is installed by the management plane or the control plane, and in the forwarding information the multicast address corresponding to the service instance is taken as the destination address.

9. The method according to any one of claims 1 to 7, **characterized in that** the network is the Ethernet and the method further comprises:
learning, by the node, the forwarding information according to the service instance data message received by the node.

10. The method according to any one of claims 1 to 7, **characterized in that** different backbone network edge nodes in the network are full mesh connected by tunnels, and the backbone network edge nodes forwards the data message to client network after having received the data message from the tunnels.

11. A switching apparatus for data transmission, **characterized in that** the switching apparatus comprises
a storage module adapted to store mapping information between service instances and multiple addresses; and
a forwarding module adapted to, after the switching apparatus to which the forwarding module belongs has received a service instance data message needed to be transmitted through broadcast mechanism, determine the service instance to which the service instance data message belongs, query, from the mapping information stored in the storage module, a multicast address corresponding to the service instance to which the service instance data message belongs, and transmit the service instance data message according to the found multicast address.

12. The switching apparatus according to claim 11, **characterized in that** when the switching apparatus is a user edge node in a network, the forwarding module comprises an encapsulation sub-module, a de-capsulation module and a forwarding sub-module, wherein
the encapsulation sub-module is adapted to, when the service instance data message enters the network and it is determined that there is no network destination address corresponding to the destination address of the service instance data message, encapsulate the user data message by using the multicast address corresponding to the service instance to which the user data message belongs as an outermost destination address of the service instance data message, and transmit the encapsulated user data message to the forwarding sub-module;
the de-capsulation sub-module is adapted to, when the service instance data message leaves the network, de-capsulate the service instance data message and then transmit the de-capsulated data message to the forwarding sub-module;
the forwarding sub-module is adapted to query forwarding information corresponding to outermost destination address of the data message transmitted from the encapsulation sub-module and forward the data message transmitted from the encapsulation sub-module according to the found forwarding information; and adapted to query forwarding information corresponding to the destination address of the data message transmitted from the de-capsulation sub-module and forward the data message transmitted from the de-capsulation sub-module to a user side.

13. The switching apparatus according to claim 11 or 12, **characterized in that** the switching apparatus is a switching apparatus in the Ethernet and further comprises:
a self-learning module adapted to learn the forwarding information according to the service instance message received by the switching apparatus.
